Europäisches Patentamt

(19) European Patent Office

Office européen des brevets

(11) Publication number: **0 292 112 B1**

(12) **EUROPEAN PATENT SPECIFICATION**

(45) Date of publication of patent specification:
24.07.91 Bulletin 91/30

(51) Int. Cl.⁵: **B60S 1/24**

(21) Application number: **88303417.5**

(22) Date of filing: **15.04.88**

(54) **Crank arm assembly for windshield wiper drive.**

(30) Priority: **21.05.87 US 52478**

(43) Date of publication of application:
**23.11.88 Bulletin 88/47**

(45) Publication of the grant of the patent:
**24.07.91 Bulletin 91/30**

(84) Designated Contracting States:
**DE FR GB IT**

(56) References cited:
**WO-A-86/05751**
**AU-A- 459 711**
**US-A- 2 825 918**

(73) Proprietor: **GENERAL MOTORS
CORPORATION
General Motors Building 3044 West Grand
Boulevard
Detroit Michigan 48202 (US)**

(72) Inventor: **Buschur, Jeffrey James
1074 Geneva
Beavercreek Ohio 45385 (US)**
Inventor: **Schoen, Roy Carl
5800 W. Kessler Cowelsville Road
West Milton Ohio 45383 (US)**
Inventor: **Paulick, David Ralph
2408 Burning Tree Drive
Kettering Ohio 45440 (US)**

(74) Representative: **Haines, Arthur Donald et al
Patent Section Vauxhall Motors Limited 1st
Floor Gideon House 26 Chapel Street
Luton, Bedfordshire LU1 2SE (GB)**

## Description

This invention relates generally to automotive windshield wiper systems and, more particularly, to a crank arm assembly between a wiper drive motor and a transmission link of the windshield wiper system as specified in the preamble of claim 1, for example as disclosed in WO-A-86/05751.

Typical automotive windshield wiper systems include a drive link connected to the wiper arms and extending across the vehicle, an electric motor, and a crank arm attached to an armature shaft of the motor and to one end of the drive link. When the motor shaft rotates, the drive link reciprocates in strokes determined primarily by the length of the crank arm, which reciprocation causes the wiper arms to angularly oscillate between the inner and outer limits of their normal wiping arcs. In depressed park systems, the wiper arms are driven to stowed or parked positions below the inner limits of their normal wiping arcs at the end of the final wiping stroke. In so-called reverse-to-park depressed park systems, the extra angular movement of the wiper arms beyond their inner wipe limits is the result of mechanism in the wiper drive system which automatically increases the effective length of the crank arm in response to the onset of reverse rotation of the wiper motor shaft. In one such system, an eccentric bushing is arranged between the outboard end of the crank arm and the corresponding end of the drive link. The bushing maintains a folded position when the motor shaft rotates in one direction corresponding to normal wiping of the windshield and automatically pivots to an unfolded position when the direction of motor shaft rotation reverses. In another reverse-to-park system disclosed in US-A-4 454 626, a fixed length crank arm on the motor shaft carries a crank pin which rotates in a fixed orbit around the motor shaft. An intermediate link has one end pivotally connected to the crank pin and the other end pivotally connected to the windshield wiper drive link. A control member is freely rotatable in one direction about the motor shaft axis but is prevented from rotating in the opposite direction by a one-way bearing. The control member defines a guide for the end of the intermediate link where the latter is attached to the drive link. When the motor shaft rotates in the direction corresponding to normal windshield wiping, the crank arm engages a stop on the control member and the latter rotates as a unit with the crank arm in a folded configuration of the assembly. At the onset of motor shaft rotation in the opposite direction, the one-way bearing prevents corresponding rotation of the control member so that the succeeding increments of angular movement of the crank arm relative to the control member effect linear outward displacement of the end of the intermediate link where the latter is attached to the drive link which linear movement increases the effective length of the crank arm assembly to park the wiper arms below the normal wiping arc. A crank arm assembly according to this invention represents a novel alternative to the just described reverse-to-park crank arm assembly.

A crank arm assembly according to the present invention is characterised by the features specified in the characterising portion of claim 1.

This invention is a new and improved reverse-to-park crank arm assembly for automotive windshield wiper systems. The new and improved crank arm assembly includes a hub rotatable as a unit with the motor shaft, a crank pin on the hub, an intermediate link having one end pivotally connected to the crank pin and the other end pivotally connected to the wiper drive link and a short guide slot on a lengthwise axis of the intermediate link between the ends thereof, an annular control member disposed around the hub and carrying a guide pin slidably received in the guide slot of the intermediate link, and a drive lug on the hub engageable on the side of the intermediate link. When the motor shaft rotates in one direction corresponding to normal windshield wiping, the hub rotates relative to the intermediate link until the drive lug engages the latter in a folded position of the intermediate link relative to the hub. The intermediate link is captured between the drive lug and the crank pin and rotates as a unit with the hub in the one direction. A coil torsion brake spring of the crank arm assembly is disposed in an annular space or chamber between the hub and an inner cylindrical wall of the motor housing. The brake spring has an unflexed diameter exceeding the diameter of the inner cylindrical wall so that the spring is frictionally locked to the inner cylindrical wall when unflexed. The brake spring has angularly spaced hook-like formations at opposite ends between which is disposed a skirt of the control member. When the spring is unflexed, the skirt is captured between the hook-like formations and the control member is immobilized. When the hub rotates in the one direction, a tang on the hub engages one of the hook-like formations and flexes the spring to free the latter from the inner cylindrical wall so that the brake spring and the control member are rotatable as a unit with the hub. At the onset of hub rotation in the opposite direction, the tang separates from the hook-like formation to allow the brake spring to unflex against the inner cylindrical wall and immobilize the control member. The hub then rotates in the opposite direction through an included angle of about 180 degrees to shift the intermediate link to its unfolded position.

Further developments in line with the invention defined in claim 1 are specified in the dependent claims.

## Brief Description of the Drawings

Figure 1 is a partially schematic plan view of an automotive windshield wiper system including a crank arm assembly according to this invention ;
Figure 2 is a partially broken-away view taken generally along the plane indicated by lines 2-2 in Figure 1 ;
Figure 3 is a perspective view of the crank arm assembly according to this invention showing an intermediate link in a folded position relative to a hub ; and
Figure 4 is similar to Figure 3 but showing the intermediate link in an unfolded position relative to the hub.

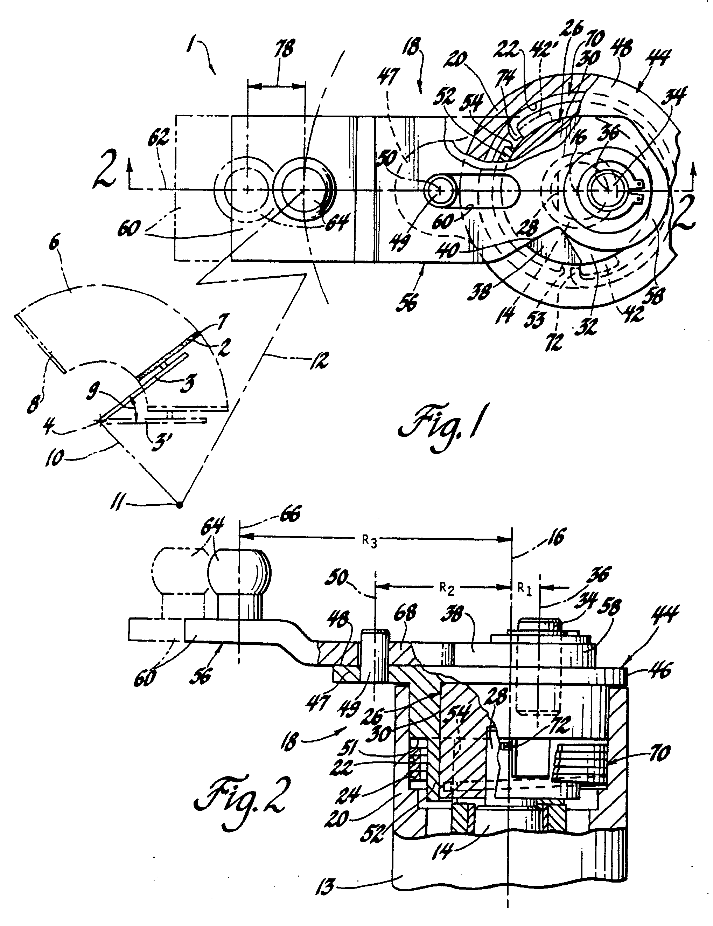

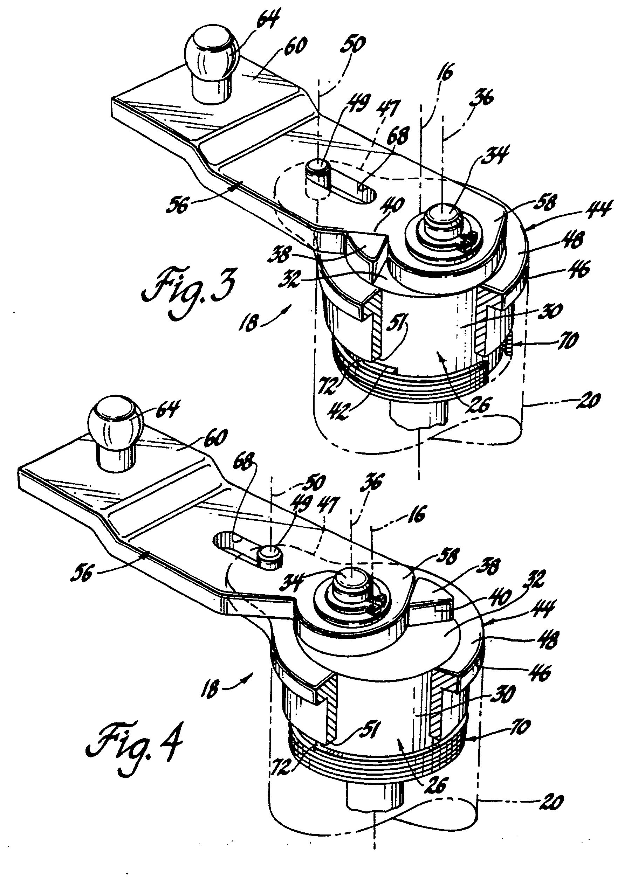

Referring now to Figure 1 of the drawings, a schematically illustrated automotive windshield wiper system 1 includes a wiper blade 2 attached to the distal end of a wiper arm 3 supported on a vehicle body for pivotal movement about an axis 4 of the body. During normal wiping operation, the wiper arm 3 angularly oscillates in a wiping arc 6 having an inner wipe limit 7 and an outer wipe limit 8. When not in use, the wiper arm 3 assumes a depressed parked position 3' below the wiping arc 6 angularly spaced from the inner wipe limit 7 by an angle 9. The angle 9 is illustrated in exaggerated fashion in Figure 1 for clarity. A crank arm 10 is rigidly connected to and oscillates as a unit with the wiper arm 3. The distal end of the crank arm 10 is pivotally connected at 11 to one end of a schematically illustrated wiper drive link 12 which typically extends across the vehicle body. A drive motor 13, partially illustrated in Figure 2, is supported on the vehicle body and includes an armature shaft 14 rotatable in opposite directions about a main axis 16 of the motor. A crank arm assembly 18 according to this invention is disposed between the motor shaft 14 and the end of the wiper drive link 12 opposite the pivot connection 11.

Referring now to Figures 1 and 2 of the drawings, the partially illustrated electric motor 13 further includes a stationary housing having an annular neck portion 20. The annular neck portion 20 has an inner cylindrical wall 22 which forms part of the crank arm assembly 18 and which is centred on the main axis 16. The inner cylindrical wall 22 terminates within the neck portion 20 at an annular shoulder 24.

The motor shaft 14 projects into the neck portion 20 and receives thereover within the neck portion a cylindrical hub 26 of the crank arm assembly 18. A flattened "D" section 28, Figures 1 and 2, on the end of the motor shaft is received in a corresponding bore in the hub whereby the hub is attached to the shaft for rotation as a unit therewith about main axis 16. The hub 26 has a cylindrical outer wall 30 centred on the main axis 16 and a circular end wall 32 disposed in a plane perpendicular to the main axis 16. A crank pin 34 projects rigidly from the hub 26 perpendicular to the circular end wall 32. The crank pin is centred on an axis 36 parallel to the main axis 16 and spaced laterally therefrom by a radial distance $R_1$, Figure 2. The crank pin traverses an inner circular orbit about the main axis 16 when the motor shaft rotates. A drive lug 38 having a contact edge 40 thereon projects rigidly from the circular end wall 32 of the hub 26 at a predetermined angular interval from the crank pin 34. A tang 42, Figures 1-3, near the bottom of the hub, projects from the outer wall 30 of the hub into the annular chamber defined between the outer wall 30 and the inner cylindrical wall 22 on the neck portion of the motor housing.

The crank arm assembly 18 further includes a control member 44 in the form of a cylindrical collar rotatably journalled on the cylindrical outer wall 30 of the hub within the neck portion 20. The control member 44 has a flange 46 at one end including an offset arm portion 47 and a top surface 48 parallel to the circular end wall 32 of the hub. A guide pin 49 projects rigidly from the offset arm portion 47 perpendicular to the top surface 48 and is centred on an axis 50 parallel to the main axis 16 and laterally displaced therefrom by a second radial distance $R_2$, Figure 2. The control member 44 has an annular lower face 51 extending therearound above the tang 42 on the hub 26 in a plane parallel to the top surface 48. A relatively thin arcuate skirt 52 of the control member 44 projects down from the lower face 51 in close proximity to the outer wall 30 of the hub 26. As seen best in Figure 1, the skirt 52 is bounded on one end by a first vertical edge 53 and on the other end by a second vertical edge 54. The control member 44 is freely rotatable relative to the hub 26 and the guide pin 49 traverses an intermediate circular orbit around the main axis 16 during such rotation.

An elongated, generally flat intermediate link 56 has an inboard end 58, an outboard end 60 and a lengthwise axis 62, Figure 1, extending between the inboard and outboard ends. A link ball 64 is rigidly attached to the intermediate link 56 adjacent the outboard end 60 thereof and is centred on an axis 66, Figure 2, perpendicular to the intermediate link. The link ball 64 provides a pivot connection at the axis 66 between the intermediate link 56 and the drive link 12. The intermediate link 56 includes a short guide slot 68 having a width corresponding generally to the diameter of the guide pin 49 and centred on the lengthwise axis 62. The intermediate link further includes a circular aperture adjacent the inboard end 58 which rotatably receives the crank pin 34 whereby the intermediate link 56 at the inboard end thereof is pivotally connected to the crank pin. In addition, the guide pin 49 is slidably received in the guide slot 68 thereby defining a sliding pivot fulcrum between the control member 44 and the intermediate link.

The crank arm assembly 18 further includes a brake in the form of a coil torsion brake spring 70 disposed below the lower face 51 of the control member in the annular chamber between the inner cylindrical wall 22 on the motor housing and the outer cylindrical wall 30 on the hub. The spring 70 surrounds the skirt 52 of the control member projecting down from the lower face 51. The spring 70 has an outside diameter exceeding the diameter of the inner wall 22 when the spring is unflexed so that in its unflexed condition the spring is frictionally locked to the wall 22 and thus immobilized. The spring has a first hook-like formation 72 at one end, Figures 1, 3 and 4, and a second hook-like formation 74, Figure 1, at the other end angularly spaced from the first formation 72. The skirt 52 is disposed between the hook-like formations 72 and 74 with the formation 72 being adjacent the vertical edge 53 of the skirt and the formation 74 being adjacent the vertical edge 54 of the skirt.

The crank arm assembly 18 according to this invention operates as follows. The motor shaft rotates clockwise, Figures 1, 3 and 4, during normal windshield wiping. The hub 26 is free to rotate clockwise, Figure 1, relative to the intermediate link 56 until the contact edge 40 of the drive lug 38 engages the side of the intermediate link. Thereafter, the intermediate link is captured between the drive lug and the crank pin so that further clockwise rotation of the hub is accompanied by clockwise rotation of the intermediate link as a unit therewith. The angular interval about the axis 16 between the crank pin 34 and the drive lug 38 is calculated to effect the aforesaid capture of the intermediate link in a folded position of the latter relative to the hub 26, Figure 1, 2 and 3, defined by linear alignment of the three axes 16, 36 and 66 with the axes 36 and 66 on opposite sides of the main axis 16.

Just before the contact edge 40 of the drive lug 38 reaches the side of the intermediate link 56, the tang 42 on the hub engages the first hook-like formation 72 on the brake spring 70. Then, as the hub continues to rotate clockwise until the contact edge 40 abuts the side of the intermediate link, the brake spring is torsionally flexed to an outside diameter smaller than the diameter of the inner wall 22. With the spring thus disconnected from the inner wall 22, the hub drives the intermediate link 56 around the main axis 16 and carries with it the control member 44 and the brake spring 70. Concurrently, the link ball 64 traverses an outside circular orbit of radius $R_3$ calculated to reciprocate the drive link 12 through a stroke which pivots the wiper arm 3 between the inner and outer limits 7 and 8, respectively, of the wiping arc 6.

When it is desired to terminate the wiping operation of the wiper arm 3, conventional motor control means, not shown, are manually actuated to initiate reversal of the direction of rotation of the motor shaft 14 substantially at the instant the wiper arm 3 next reaches the inner wipe limit 7. At the onset of reverse rotation, counter-clockwise rotation of the motor shaft 14 and the hub 26 occurs about the axis 16, the drive lug 38 separates from the intermediate link 56 and the tang 42 separates from the hook-like formation 72 on the end of the spring 70. The spring 70 then torsionally unflexes into frictional engagement against the cylindrical wall 22 on the neck portion 20 of the motor housing. The spring 70 is then immobilized with the skirt 52 of the control member 44 captured between the hook-like formations 72 and 74 so that the control member is likewise immobilized.

The motor control maintains current flow to the motor for a time duration sufficient to rotate the motor shaft 14 counterclockwise through an included angle of about 180 degrees from its position at the onset of reverse rotation. With the control member 44 immobilized by the brake spring 70, the crank pin 34 orbits approximately 180 degrees counterclockwise in its inner circular orbit during which movement the intermediate link 56 both rocks about the sliding fulcrum defined by the guide pin 49 and translates radially outwards relative to the main axis 16. The intermediate link 56 achieves an unfolded position, Figure 4, at about the instant the motor is switched off after 180 degrees of reverse rotation, the unfolded position being defined by linear alignment of the axes 16, 36 and 66 with the axes 36 and 66 on the same side of the main axis 16. During movement of the intermediate link from the folded to the unfolded position, the link ball 64 moves radially outwards relative to the main axis 16 through a park stroke 78, Figure 1, thereby increasing the effective length of the intermediate link and causing the wiper arm 3 to move from the inner wipe limit 7 to the depressed parked position 3'. Concurrently, the tang 42 rotates with the hub 26 inside the stationary brake springs from its initial position near the hook-like formation 72 to a final position 42', Figure 1, adjacent the other hook-like formation 74.

To subsequently initiate windshield wiping operation, the motor is switched on to rotate the motor shaft 14 clockwise. The brake spring 70 maintains the control member 44 stationary as the crank pin 34 retraces its previously final 180 degrees of orbital movement in the inner circular orbit. The intermediate link is concurrently withdrawn from the unfolded position to the folded position. As the intermediate link approaches the folded position, the tang 42 re-engages the hook-like formation 72 on the spring 70 to torsionally flex the spring away from the inner wall 22 just as the contact edge 40 on the drive lug engages the side of the intermediate link. Thereafter, the intermediate link rotates clockwise as a unit with the hub as described hereinbefore.

## Claims

1. A crank arm assembly (18) in combination with an electric motor (13) including a motor shaft (14) supported on a housing of said motor for rotation in opposite first and second directions about a main axis (16) of said motor, in which said crank arm assembly (18) comprises : an eccentric member (34) rotatable as a unit with said motor shaft (14) in a circular orbit around said main axis (16), a control member (44) supported on said housing for rotation about said main axis (16) independently of said motor shaft (14), an intermediate link (56) disposed in a plane perpendicular to said main axis (16) and pivotally connected at one end (58) to said eccenter member (34) and including a link ball (64) rigidly connected thereto at the other end (60), and means (49, 68) on said intermediate link (56) and on said control member (44) defining a slidable pivot fulcrum therebetween ; said intermediate link (56) has a folded position relative to said motor shaft (16) defined by linear alignment of said link ball (64) and the axis of said eccentric member (34) and said main axis (16) with said link ball (64) and the axis of said eccentric member (34) on opposite sides of said main axis (16) ; said intermediate link (56) has an unfolded position relative to said motor shaft (16) defined by linear alignment of said link ball (64) and the axis of said eccentric member (34) and said main axis (16) with said link ball (64) and the axis of said eccentric member (34) on the same side of said main axis (16) ; said eccentric member (34) is operative when said control member (44) is immobilized relative to said housing and in response to rotation of said motor shaft (14) in either of said first and said second directions through substantially 180 degrees to move said intermediate link (56) between said folded and said unfolded positions ; in said folded position of said intermediate link (56), when said motor shaft (14) rotates in said first direction, said intermediate link (56) rotates as a unit with said eccentric member (34) about said main axis (16) so that said link ball (64) moves in a circular orbit around said main axis (16) that is larger in diameter than the circular orbit of the eccentric member (34) ; and there is a means between said control member (44) and said motor housing which is operative, when selectively applied, to immobilize said control member (44) relative to said motor housing, and is made operative in response to the onset of motor shaft rotation in said second direction during the immediately succeeding approximately 180 degrees of motor shaft rotation in said second direction and during the next succeeding approximately 180 degrees of motor shaft rotation in said first direction, characterised in that said eccentric member is a crank pin (34) ; the slidable pivot fulcrum (49, 68) is located between said ends (58, 60) of said intermediate link (56) ; there is a means defining a drive lug (38) rotatable as a unit with said crank pin (34) and engageable with said intermediate link (56) in said folded position of said intermediate link (56) so that, when said motor shaft (14) rotates in said first direction, said intermediate link (56) is captured between said crank pin (34) and said drive lug (38) and is rotated as a unit with said drive lug (38) and said crank pin (34) about said main axis (16) so that said link ball (64) moves in said circular orbit around said main axis (16) that is larger in diameter than the circular orbit of the crank pin (34) ; and said means between said control member (44) and said motor housing comprises a brake means (70) between said control member (44) and said motor housing which is operative, when selectively applied, to immobilize said control member (44) relative to said motor housing, and brake control means (42, 72, 74) between said brake means (70) and said motor shaft (14) which are operative in response to the onset of motor shaft rotation in said second direction to apply said brake means (70) and to maintain application of said brake means (70) during the immediately succeeding approximately 180 degrees of motor shaft rotation in said second direction and during the next succeeding approximately 180 degrees of motor shaft rotation in said first direction.

2. A crank arm assembly (18) according to claim 1, in which said slidable pivot fulcrum (49, 68) located between said ends (58,60) of said intermediate link (56) includes a guide slot (68) in one of said intermediate link (56) and said control member (44), and a guide pin (49) on the other of said intermediate link (56) and said control member (44) slidably and pivotally received in said guide slot (68).

3. A crank arm assembly (18) according to claim 2, in which said guide slot (68) is in said intermediate link (56) and said guide pin (49) is on said control member (44).

4. A crank arm assembly (18) according to any one of claims 1 to 3, in which said brake means between said control member (44) and said motor housing includes means (20) on said motor housing defining an inner cylindrical wall (22) centered around said main axis (16) ; hub means (26) on said motor shaft (14) defining an outer cylindrical wall (30) centered on said main axis (16) and rotatable as a unit with said motor shaft (16), said inner and said outer cylindrical walls (22, 30) defining an annular space therebetween centered around said main axis (16) ; a coil torsion spring (70) disposed in said annular space and including a first hook-like formation (72) at one end and a second hook-like formation (74) at the other end angularly spaced from said first hook-like formation (72), said spring (70) having an unflexed condition in which it frictionally engages said inner cylindrical wall (22) and a flexed condition in which it disengages from said inner cylindrical wall (22) ; an arcuate skirt (52) on said control member (44) disposed between said first and said second hook-like formations (72, 74) ; and a tang (42) on said hub means (26) which is engageable on said first hook-like formation (72) of said spring (70) when said motor shaft (14) rotates in said first direction and is operative to torsionally flex said spring (70) to said flexed condition, and which is separable from said first hook-like formation (72) when said motor shaft (14) rotates in said second direction so that said spring (70) torsionally unflexes to said unflexed condition and thereby immobilizes said control member (44) by capturing said arcuate skirt (52) between said first and said second hook-like formations (72, 74).

**Patentansprüche**

1. Kurbelarm-Anordnung (18) in Kombination mit einem Elektromotor (13), der eine an einem Gehäuse des Motors zur Drehung in entgegengesetzten ersten und zweiten Richtungen um eine Hauptachse (16) des Motors abgestützte Motorwelle (14) enthält, wobei die Kurbelarm-Anordnung (18) umfaßt : ein als eine Einheit mit der Motorwelle (14) in einer kreisförmigen Umlaufbahn um die Hauptachse (16) drehbares Exzenterglied (34), ein an dem Gehäuse zur von der Motorwelle (14) unabhängigen Drehung um die Hauptachse (16) abgestütztes Steuerglied (44), eine in einer zur Hauptachse (16) senkrechten Ebene angeordnete Zwischenverbindung (56), die an einem Ende (58) mit dem Exzenterglied (34) schwenkbar verbunden ist und eine starr an dem anderen Ende (60) damit verbundene Gelenkkugel (64) enthält, und Mittel (49, 68) an der Zwischenverbindung (56) und an dem Steuerglied (44), die ein gleitendes Schwenkzwischengelenk bestimmen ; wobei die Zwischenverbindung (56) eine eingeklappte Lage relativ zu der Motorwelle (16) besitzt, die durch lineare Ausrichtung der Gelenkkugel (64) und der Achse des Exzentergliedes (34) und der Hauptachse (16) bestimmt ist, mit der Gelenkkugel (64) und der Achse des Exzentergliedes (34) an entgegengesetzten Seiten der Hauptachse (16) ; die Zwischenverbindung (56) eine ausgeklappte Lage relativ zu der Motorwelle (14) besitzt, die durch lineare Ausrichtung der Gelenkkugel (64) und der Achse des Exzentergliedes (34) und der Hauptachse (16) bestimmt ist, mit der Gelenkkugel (64) und der Achse des Exzentergliedes (34) an der gleichen Seite der Hauptachse (16) ; das Exzenterglied (34) bei relativ zu dem Gehäuse festgelegtem Steuerglied (44) und in Reaktion auf Drehung der Motorwelle (14) in einer der ersten oder der zweiten Richtung im wesentlichen durch 180° betätigbar ist zur Bewegung der Zwischenverbindung (56) zwischen der eingeklappten und der ausgeklappten Lage ; die Zwischenverbindung (56), wenn die Motorwelle (14) sich in der ersten Richtung dreht, in ihrer eingeklappten Lage als eine Einheit mit dem Exzenterglied (34) um die Hauptachse (16) so rotiert, daß die Gelenkkugel (64) sich in einer kreisförmigen Umlaufbahn um die Hauptachse (16) bewegt, die einen größeren Durchmesser besitzt als die kreisförmige Umlaufbahn des Exzentergliedes (34) ; wobei ein Mittel zwischen dem Steuerglied (44) und dem Motorgehäuse vorhanden ist, das bei wahlweisem Einsatz wirksam ist, das Steuerglied (44) relativ zu dem Motorgehäuse festzulegen und in Abhängigkeit von dem Anfang der Motorwellendrehung in der zweiten Richtung während der unmittelbar nachfolgenden Motorwellendrehung durch etwa 180° in der zweiten Richtung und während der nächstfolgenden Motorwellendrehung durch etwa 180° in der ersten Richtung wirksam gemacht wird, dadurch gekennzeichnet, daß das Exzenterglied ein Kurbelstift (34) ist ; daß das gleitbare Schwenklager (49, 68) zwischen den Enden (58, 60) der Zwischenverbindung (56) angeordnet ist ; daß ein Mittel vorhanden ist, welches eine als eine Einheit mit dem Kurbelstift (34) drehbare Antriebslasche (34) bestimmt und mit der Zwischenverbindung (56) in deren eingeklappter Stellung so in Eingriff bringbar ist, daß, wenn die Motorwelle (34) in der ersten Richtung rotiert, die Zwischenverbindung (56) zwischen dem Kurbelstift (34) und der Antriebslasche (38) eingefangen und als eine Einheit mit der Antriebslasche (38) und dem Kurbelstift (34) um die Hauptachse (16) so rotiert wird, daß die Gelenkkugel (649 sich in der kreisförmigen Umlaufbahn um die Hauptachse (16) bewegt, die einen größeren Durchmesser als die kreisförmige Umlaufbahn des Kurbelstifts (34) besitzt ; und daß das Mittel zwischen dem Steuerglied (44) und dem Motorgehäuse ein Bremsmittel (70) zwischen dem Steuerglied (44) und dem Motorgehäuse umfaßt, das, wahlweise angelegt, zur Festlegung des Steuergliedes (44) relativ zu dem Motorgehäuse wirksam ist, und Bremssteuermittel (42, 72, 74) zwischen dem Bremsmittel (70) und der Motorwelle (14), die in Abhängigkeit von dem Beginn der Motorwellendrehung in der zweiten Richtung wirksam sind, das Bremsmittels (70) zu beaufschlagen und die Beaufschlagung des Bremsmittels (70) während der unmittelbar folgenden Motorwellendrehung durch etwa 180° in der zweiten Richtung und während der nächstfolgenden Motorwellendrehung durch etwa 180° in der ersten Richtung aufrecht zu erhalten.

2. Kurbelarm-Anordnung (18) nach Anspruch 1, bei der das zwischen den Enden (58, 60) der Zwischenverbindung (56) angeordnete gleitbare Schwenklager (49, 68) einen Führungsschlitz (68) in einem der Teile Zwischenverbindung (56) und Steuerglied (44) enthält und einen gleitbar und schwenkbar in dem Führungsschlitz (68) aufgenommenen Führungsstift (49) an dem jeweils anderen Teil, Zwischenverbindung (56) oder Steuerglied (44).

3. Kurbelarm-Anordnung (18) nach Anspruch 2, bei der der Führungsschlitz (68) sich in der Zwischenverbindung (56) und der Führungsstift (49) sich an dem Steuerglied (44) befinden.

4. Kurbelarm-Anordnung (18) nach einem der Ansprüche 1 bis 3, bei der das Bremsmittel zwischen dem Steuerglied (44) und dem Motorgehäuse enthält: Mittel (20) an dem Motorgehäuse, welches eine innere, um die Hauptachse (16) zentrierte Zylinderwand (22) bestimmt ; Nabenmittel (26) an der Motorwelle (14), welches eine an der Hauptachse (16) zentrierte und einheitlich mit der Motorwelle (16) drehbare äußere Zylinderwand (30) bestimmt, wobei die innere und die äußere Zylinderwand (22, 30) einen um die Hauptachse (16) zentrierten Zwischen-Ringraum bestimmen ; eine Wendel-Torsionsfeder (70), die in dem Ringraum angeordnet ist und eine erste hakenartige Ausbildung (72) an einem Ende und eine zweite hakenartige Ausbildung (74) an dem anderen Ende mit Winkelabstand von der ersten hakenartigen Ausbildung (72) enthält, wobei die Feder (70) einen unabgebogenen Zustand besitzt, in welchem sie mit Reibung an der inneren Zylinderwand (22) anliegt, und einen abgebogenen Zustand, in dem sie sich von der inneren Zylinderwand (22) löst ; einen gebogenen Schurz (52), der an dem Steuerteil (44) zwischen der ersten und der zweiten hakenartigen Ausbildung (72, 74) angeordnet ist ; und einen Mitnehmer (42) an dem Nabenmittel (26), der mit der ersten hakenartigen Ausbildung (72) der Feder (70) in Eingriff bringbar ist, wenn sich die Motorwelle (14) in der ersten Richtung dreht, und zum Torsions-Abbiegen der Feder (70) in den abgebogenen Zustand betätigbar und von der ersten hakenartigen Ausbildung (72) abtrennbar ist, wenn sich die Motorwelle (14) in der zweiten Richtung dreht, so daß die Feder (70) sich torsionsmäßig in den unabgebogenen Zustand zurückstellt und dadurch das Steuerglied (44) festlegt durch Einfangen des gekrümmten Schurzes (52) zwischen der ersten und der zweiten hakenartigen Ausbildung (72, 74).

## Revendications

1. Ensemble à bras de manivelle (18), en combinaison avec un moteur électrique (13) qui comprend un arbre (14) de moteur supporté par un carter dudit moteur pour tourner dans un premier sens et un deuxième sens opposés l'un de l'autre autour d'un axe principal (16) dudit moteur, dans lequel ledit ensemble à bras de manivelle (18) comprend : un organe excentrique (34) qui est entraîné en rotation solidairement avec ledit arbre (14) du moteur, suivant une orbite circulaire autour dudit axe principal (16), un organe de commande (44) porté par ledit carter pour tourner autour dudit axe principal (16) indépendamment dudit arbre (14) du moteur, une pièce de liaison (56) disposée dans un plan perpendiculaire audit axe principal (16) et articulée à une première extrémité (58) sur ledit organe excentrique (34), et qui porte une rotule (64) de la pièce de liaison fixée rigidement à l'autre extrémité (60), et des moyens (49, 68) prévus sur ladite pièce de liaison (56) et sur ledit organe de commande (44), qui définissent une articulation à pivot coulissant entre ces deux éléments ; ladite pièce de liaison (56) peut occuper une position repliée par rapport audit arbre (14) du moteur, définie par un alignement linéaire de ladite rotule (64) de la pièce de liaison et l'axe dudit organe excentrique (34), et ledit axe principal (16), et dans laquelle ladite rotule (64) de la pièce de liaison et l'axe dudit organe excentrique (34) sont de part et d'autre dudit axe principal (16) ; ladite pièce de liaison (56) peut prendre une position déployée par rapport audit arbre (14) du moteur, définie par l'alignement linéaire de ladite rotule (64) de la pièce de liaison, l'axe dudit organe excentrique (34) et ledit axe principal (16), et dans laquelle ladite rotule (64) de la pièce de liaison et l'axe dudit organe excentrique (34) sont du même côté dudit axe principal (16) ; ledit organe excentrique (34) peut entrer en action lorsque ledit organe de commande (44) est immobilisé par rapport audit carter, et en réponse à la rotation dudit arbre (14) du moteur, dans l'un ou l'autre desdits premier et deuxième sens sur sensiblement 180°, pour déplacer ladite pièce de liaison (56) entre lesdites positions repliée et déployée ; dans ladite position repliée de ladite pièce de liaison (56), lorsque ledit arbre (14) du moteur tourne dans ledit premier sens, ladite pièce de liaison (56) tourne comme un seul bloc avec ledit organe excentrique (34) autour dudit axe principal (16), de sorte que ladite rotule (64) de la pièce de liaison se déplace en une orbite circulaire autour de l'abre principal (16), orbite qui est de plus grand diamètre que l'orbite circulaire de l'organe excentrique (34) ; et il est prévu des moyens interposés entre ledit organe de commande (44) et ledit carter du moteur, qui entrent en action, lorsqu'ils sont sélectivement appliqués, pour immobiliser ledit organe de commande (44) par rapport audit carter du moteur, et qui sont rendus actifs en réponse au début de la rotation de l'arbre du moteur dans le deuxième sens, pendant l'arc qui suit immédiatement, d'environ 180°, décrit par la rotation de l'arbre du moteur dans le deuxième sens et pendant l'arc suivant, d'environ 180°, décrit par la rotation de l'arbre du moteur dans le premier sens, caractérisé en ce que ledit organe excentrique (34) est un bouton de manivelle ; l'articulation à pivot coulissant (49, 68) est située entre les extrémités (58, 60) de la pièce de liaison (56) ; il est prévu des moyens qui définissent un taquet d'entraînement (38) qui tourne comme un seul bloc avec le bouton de manivelle (34) et qui peut être mis en prise avec la pièce de liaison (56) dans la position repliée de cette pièce de liaison (56) de sorte que, lorsque l'arbre (14) du moteur tourne dans le premier sens, la pièce de liaison (56) est capturée entre le bouton de manivelle (34) et le taquet d'entraînement (38) et il est entraîné en rotation comme un seul bloc avec le taquet d'entraînement (38) et le bouton de manivelle (34) autour de l'axe principal (16), de sorte que la rotule (64) de la pièce de liaison se déplace sur l'orbite circulaire autour de l'axe principal (16) qui est de plus grand diamètre que l'orbite circulaire du bouton de manivelle (34) ; et les moyens interposés entre l'organe de commande (44) et le carter du moteur comprennent des moyens de freinage (70) interposés entre l'organe de commande (44) et le carter du moteur et qui entrent en action, lorsqu'ils sont sélectivement appliqués, pour immobiliser l'organe de commande (44) par rapport au carter du moteur, et des moyens (42, 72, 74) de commande des moyens de freinage interposés entre les moyens de freinage (70) et l'arbre (14) du moteur qui entrent en action en réponse au début de la rotation de l'arbre du moteur dans le deuxième sens en appliquant les moyens de freinage (70) et en maintenant l'application des moyens de freinage (70) pendant l'arc qui suit immédiatement, d'environ 180°, de rotation de l'arbre du moteur dans le deuxième sens et pendant l'arc qui lui fait suite, d'environ 180°, de rotation de l'arbre du moteur dans le premier sens.

2. Ensemble à bras de manivelle (18) selon la revendication 1, dans lequel ladite articulation à pivot coulissant (49, 68) située entre les extrémités (58, 60) de la pièce de liaison (56) comprend une fente de guidage (68) prévue dans l'un des éléments qui sont la pièce de liaison (56) et l'organe de commande (44), et un doigt de guidage (49) prévu sur l'autre desdits éléments qui sont la pièce de liaison (56) et l'organe de commande (44), et qui est reçu dans la fente de guidage (68) en pouvant coulisser et pivoter.

3. Ensemble à bras de manivelle (18) selon la revendication 2, dans lequel la fente de guidage (68) est prévue dans la pièce de liaison (56) et le doigt de guidage (49) est prévu sur l'organe de commande (44).

4. Ensemble à bras de manivelle (18) selon une quelconque des revendications 1 à 3, dans lequel les moyens de freinage interposés entre l'organe de commande (44) et le carter du moteur comprennent des moyens (20) prévus sur le carter du moteur et qui définissent une paroi cylindrique intérieure (22) centrée sur l'axe principal (16) ; des moyens formant moyeu (26) prévus sur l'arbre (14) du moteur et qui définissent une paroi cylindrique extérieure (30) centrée sur l'axe principal (16) et qui tournent comme un seul bloc avec l'arbre (16) du moteur, les parois cylindriques intérieure et extérieure (22, 30) définissant entre elles un espace annulaire centré sur l'axe principal (16) ; un ressort de torsion hélicoïdal (70) disposé dans cet espace annulaire et comprenant une première formation (72) recourbée en crochet à une première extrémité et une deuxième formation (74) recourbée en crochet à l'autre extrémité, qui est angulairement espacée de la première formation (72) recourbée en crochet, ce ressort (70) pouvant prendre un état détendu, dans lequel il est en contact par friction avec la paroi cylindrique intérieure (22), et une position fléchie, dans laquelle il est dégagé de la paroi cylindrique intérieure (22) ; une jupe courbe (52) prévue sur l'organe de commande (44) et disposée entre les première et deuxième formations recourbées en crochet (72, 74) ; et une queue (42) prévue sur les moyens formant moyeu (26) qui peut être mise en prise avec la première formation (72) recourbée en crochet du ressort (70) lorsque l'arbre (14) du moteur tourne dans le premier sens et qui entre en action pour faire fléchir le ressort (70) en torsion pour lui faire prendre l'état fléchi ; et qui peut se dégager de la première formation (72) recourbée en crochet lorsque l'arbre (14) du moteur tourne dans le deuxième sens, de sorte que le ressort (70) se détend par torsion pour prendre l'état détendu et, de cette façon, immobiliser l'organe de commande (44) en capturant la jupe courbe (52) entre les première et deuxième formations (72, 74) recourbées en crochet.

Fig.1

Fig.2

EP 0 292 112 B1

Fig.3

Fig.4

10